# EUROPÄISCHE PATENTANMELDUNG

(11) **EP 2 402 145 A2**
(43) Veröffentlichungstag der Anmeldung: **04.01.2012**
(21) Anmeldenummer: 11167791.0
(22) Anmeldetag: 27.05.2011
(51) Int. Cl.: B29C 65/16

(54) **Verbinden von drei Bauteilen mittels Laserdurchstrahlschweißen**

(30) Priorität: 29.06.2010 DE 102010030679
(71) Anmelder: Robert Bosch GmbH, 70442 Stuttgart (DE)
(72) Erfinder: Hein, Bernd, 72270 Baiersbronn/Schoenmuenzach (DE); Ahrens, Dietmar, 77933 Lahr (DE); Mahfoudh, Samir, 77815 Buehl (DE); Heier, Christoph, 76473 Iffezheim (DE); Ackermann, Jens, 70437 Stuttgart (DE); Tuechert, Carsten, 70199 Stuttgart (DE); Althaus, Stephan, 73099 Adelberg (DE); Weidlich, Jochen, 76437 Rastatt (DE)

(57) **Zusammenfassung**

Die Erfindung betrifft ein Verfahren zum Herstellen einer Einrichtung durch Verbinden eines ersten, zweiten und dritten Bauteils (100, 170, 200, 270, 300, 370) mittels Laserdurchstrahlschweißen. Das Verfahren umfasst ein Bilden eines Verbindungsbereichs (410) durch Anordnen des ersten, zweiten und dritten Bauteils (100, 170, 200, 270, 300, 370) derart zueinander, dass sich ein Endabschnitt (210, 220, 230, 240, 250, 260) des zweiten Bauteils (200, 270) zwischen Endabschnitten (110, 120, 130, 140, 150, 310, 320, 330, 340, 350) des ersten und dritten Bauteils (100, 170, 300, 370) befindet. Des Weiteren umfasst das Verfahren ein Bestrahlen des Verbindungsbereichs (410) mit einem Laserstrahl (440, 441), wobei sowohl das erste und zweite Bauteil (100, 170, 200, 270) als auch das zweite und dritte Bauteil (200, 270, 300, 370) an den Endabschnitten (110, 120, 130, 140, 150, 210, 220, 230, 240, 250, 260, 310, 320, 340, 350) miteinander verbunden werden.

## Beschreibung

Die vorliegende Erfindung betrifft ein Verfahren zum Herstellen einer Einrichtung durch Verbinden eines ersten, zweiten und dritten Bauteils mittels Laserdurchstrahlschweißen.

### Stand der Technik

Zum Verbinden von Werkstücken und Bauteilen sind unterschiedliche Verbindungstechniken bekannt. Für das Verbinden von zwei Kunststoffteilen kann zum Beispiel das sogenannte Laserdurchstrahlschweißen durchgeführt werden.

Bei diesem Verbindungsverfahren weist eines der Bauteile ein für eine Laserstrahlung transparentes Material auf, wohingegen das andere Bauteil absorbierende Materialeigenschaften besitzt. Für den Schweißvorgang werden die beiden Bauteile nebeneinander bzw. zueinander überlappend angeordnet. Des Weiteren wird mithilfe einer Laserschweißvorrichtung bzw. "Laserstation" ein Laserstrahl erzeugt und derart auf die Bauteile gerichtet, dass der Laserstrahl den "transparenten Fügepartner" nahezu ungehindert transmittieren und infolgedessen der "absorbierende Fügepartner" die Energie des Laserstrahls absorbieren kann.

Die Absorption der Laserenergie führt zu einer Erwärmung und Aufschmelzung eines Teilbereichs des absorbierenden Fügepartners. Nahezu gleichzeitig wird ein Teilbereich des transparenten Fügepartners aufgrund einer zwischen den beiden Fügepartnern stattfindenden Wärmeleitung aufgeschmolzen. Eine ausreichende Wärmeleitung setzt einen entsprechenden Schweiß-/Fügedruck zwischen den Fügeteilen voraus, welcher je nach Schweißverfahren am Anfang oder spätestens zum Ende hin vorgesehen wird. Der Schweiß-/Fügedruck wird bei den sogenannten Konturverfahren durch eine beim Aufschmelzen stattfindende Volumenausdehnung, und bei den sogenannten Simultanverfahren durch Anwenden eines Anpressdrucks bzw. einer Anpresskraft oder durch Bewegen eines oder beider Fügeteile um eine vorgegebene Wegstrecke bereitgestellt.

Mit dem Laserdurchstrahlschweißen bzw. der klassischen Überlappnaht ist es möglich, zwei Flächen von zwei Bauteilen mithilfe eines Laserstrahls bzw. eines Laserfokus und in einem an einer Laserstation durchgeführten Prozessschritt zu verbinden. Bei mehreren (insbesondere drei) zu verbindenden Bauteilen und Flächen werden mehrere getrennte Laserprozesse sowie gegebenenfalls weitere Prozessschritte durchgeführt. Bei einem solchen sequentiellen Vorgehen ist die Reihenfolge der Laserprozesse oftmals durch die geometrischen Gegebenheiten und weniger durch die Prozesssicherheit bestimmt. Daher besteht die Gefahr, dass ein (anfänglicher bzw. erster) Laserprozess einen nachfolgenden (bzw. zweiten) Laserprozess und damit den gesamten Fügeprozess beeinträchtigen kann. Insbesondere kann die beim Schweißen auftretende Wärmeeinwirkung einen Bauteilverzug zur Folge haben, wodurch die ursprünglichen Geometrien bzw. Toleranzen der zu verbindenden Bauteile untereinander nicht mehr erreicht werden. Infolgedessen kann die Schweißnahtqualität eines nachfolgenden bzw. zweiten Schweißschritts wesentlich beeinträchtigt sein. Der Einsatz eines sequentiellen Schweißverfahrens ist weiterhin beschränkt durch die oftmals engen und ungünstigen Einbauverhältnisse.

### Offenbarung der Erfindung

Die Aufgabe der vorliegenden Erfindung besteht darin, ein verbessertes Verbindungsverfahren zum Herstellen einer Einrichtung aus drei Bauteilen anzugeben.

Diese Aufgabe wird durch ein Verfahren gemäß Anspruch 1 gelöst. Weitere vorteilhafte Ausführungsformen der Erfindung sind in den abhängigen Ansprüchen angegeben.

Erfindungsgemäß wird ein Verfahren zum Herstellen einer Einrichtung durch Verbinden eines ersten, zweiten und dritten Bauteils mittels Laserdurchstrahlschweißen vorgeschlagen. Das Verfahren umfasst ein Bilden eines Verbindungsbereichs durch Anordnen des ersten, zweiten und dritten Bauteils derart zueinander, dass sich ein Endabschnitt des zweiten Bauteils zwischen Endabschnitten des ersten und dritten Bauteils befindet. Das Verfahren umfasst des Weiteren ein Bestrahlen des Verbindungsbereichs mit einem Laserstrahl, wobei sowohl das erste und zweite Bauteil als auch das zweite und dritte Bauteil an den Endabschnitten miteinander verbunden werden.

Bei dem Verfahren werden sowohl das erste und zweite Bauteil als auch das zweite und dritte Bauteil durch Anwendung eines einzelnen Laserstrahls bzw. Laserfokus in einem gemeinsamen Prozessschritt und damit in simultaner Weise miteinander verschweißt. Dies stellt eine sichere und günstige Alternative zu einem sequentiellen Laserschweißen dar. Insbesondere kann ein die Verbindung beeinträchtigender Bauteilverzug vermieden werden, wodurch sich eine hohe Verbindungsqualität der drei miteinander verbundenen Bauteile erzielen lässt. Auch kann das Verfahren mit nur einer Laserschweißvorrichtung durchgeführt werden, wodurch das Verfahren mit einem relativ geringen Aufwand verbunden ist.

In einer bevorzugten Ausführungsform weist das zweite Bauteil wenigstens an dem Endabschnitt ein für den Laserstrahl transparentes Material auf. Das erste und dritte Bauteil weisen wenigstens an den Endabschnitten ein für den Laserstrahl absorbierendes Material auf. In dieser Ausgestaltung des Verfahrens kann der Laserstrahl derart auf den Verbindungsbereich gerichtet werden, dass der Laserstrahl das transparente zweite Bauteil (bzw. dessen Endabschnitt) durchdringt und zu dem absorbierenden ersten und dritten Bauteil (bzw. deren Endabschnitten) gelangen kann, um ein Aufschmelzen und infolgedessen Verbinden der Materialien der jeweiligen Bauteile hervorzurufen.

In dieser Hinsicht werden das erste, zweite und dritte Bauteil vorzugsweise derart zueinander angeordnet, dass ein vorder- bzw. stirnseitiger Bereich des Endabschnitts des zweiten Bauteils freiliegt. Auf diesen freiliegenden Bereich wird auch der Laserstrahl gerichtet. Auf diese Weise kann der Laserstrahl über den vorderseitigen Bereich des Endabschnitts des zweiten Bauteils in das zweite Bauteil eingekoppelt werden, und hiervon ausgehend zu den Endabschnitten des ersten und dritten Bauteils transmittiert werden.

In einer weiteren bevorzugten Ausführungsform ist vorgesehen, dass der Endabschnitt des zweiten Bauteils eine sich in Richtung des vorderseitigen Bereichs aufweitende Form aufweist. Die Endabschnitte des ersten und dritten Bauteils weisen jeweils eine an die aufweitende Form des Endabschnitts des zweiten Bauteils angepasste Form auf. Durch eine solche Geometrie der zu verbindenden Endabschnitte kann die den Schmelzvorgang bewirkende Transmission und Absorption des Laserstrahls relativ intensiv gestaltet werden. Auch lässt sich eine große Schweißnahtbreite erzielen. Hiermit verbunden ist eine hohe Schweißnahtqualität und Schweißnahtfestigkeit.

Im Hinblick auf die sich aufweitende Form des Endabschnitts des zweiten Bauteils kommen unterschiedliche Ausgestaltungen in Betracht. Beispielsweise kann der Endabschnitt des zweiten Bauteils schräge oder gekrümmte Seitenflächen aufweisen.

In einer weiteren bevorzugten Ausführungsform wird der Laserstrahl in Form eines sich aufweitenden Strahls auf den Verbindungsbereich gerichtet. Auch auf diese Weise kann der Schmelz- und damit der Schweißvorgang begünstigt werden.

In einer alternativen bevorzugten Ausführungsform weist das zweite Bauteil wenigstens an dem Endabschnitt ein für den Laserstrahl absorbierendes Material auf. Das erste und dritte Bauteil weisen wenigstens an den Endabschnitten ein für den Laserstrahl transparentes Material auf. In dieser Ausgestaltung kann der Laserstrahl derart auf den Verbindungsbereich gerichtet werden, dass der Laserstrahl das transparente erste und dritte Bauteil (bzw. deren Endabschnitte) durchdringt und zu dem absorbierenden zweiten Bauteil (bzw. dessen Endabschnitten) gelangen kann, um ein Aufschmelzen und infolgedessen Verbinden der Materialien der jeweiligen Bauteile hervorzurufen.

In dieser Hinsicht weist der Endabschnitt des zweiten Bauteils vorzugsweise eine sich in Richtung eines vorderseitigen Bereichs verjüngende Form auf, und weisen die Endabschnitte des ersten und dritten Bauteils jeweils eine an die sich verjüngende Form des Endabschnitts des zweiten Bauteils angepasste Form auf. Dabei kann der vorderseitige Bereich des Endabschnitts des zweiten Bauteils, auf welchen der Laserstrahl gerichtet werden kann, zum Beispiel im Wesentlichen vollständig von den Endabschnitten des ersten und dritten Bauteils eingefasst bzw. verdeckt sein.

In einer weiteren bevorzugten Ausführungsform werden die Bauteile aneinander gedrückt. Hierdurch kann ein entsprechender Schweiß-/Fügedruck zur Verfügung gestellt werden. Dies kann zum Beispiel durch Anwenden einer vorgegebenen Kraft oder durch Verschieben eines Bauteils um eine vorgegebene Wegstrecke verwirklicht werden.

Das Verfahren kann zum Beispiel im Rahmen der Herstellung einer Pumpeneinrichtung durchgeführt werden. Dabei können ein Pumpengehäuse, ein Laufrad-Aufnahmegehäuse und ein Motorgehäuse der Pumpeneinrichtung miteinander verbunden werden. In dem Laufrad-Aufnahmegehäuse ist ein Laufrad und in dem Motorgehäuse ein Motorteil zum Antreiben des Laufrads angeordnet.

Die Erfindung wird im Folgenden anhand der Figuren näher erläutert. Es zeigen:
Figur 1 ein Ablaufdiagramm zur Veranschaulichung von Schritten eines Verfahrens, bei welchem drei Bauteile verbunden werden;
Figuren 2 und 3 die Verschweißung von drei Bauteilen in einer schematischen seitlichen Darstellung;
Figuren 4 bis 8 vergrößerte Ausschnittsdarstellungen eines Fügebereichs zur Veranschaulichung unterschiedlicher Ausgestaltungen von Endabschnitten der drei Bauteile; und
Figur 9 eine schematische Darstellung einer Pumpeneinrichtung, bei welcher drei Gehäuseteile durch Durchführen des Verfahrens von Figur 1 miteinander verbunden werden können.

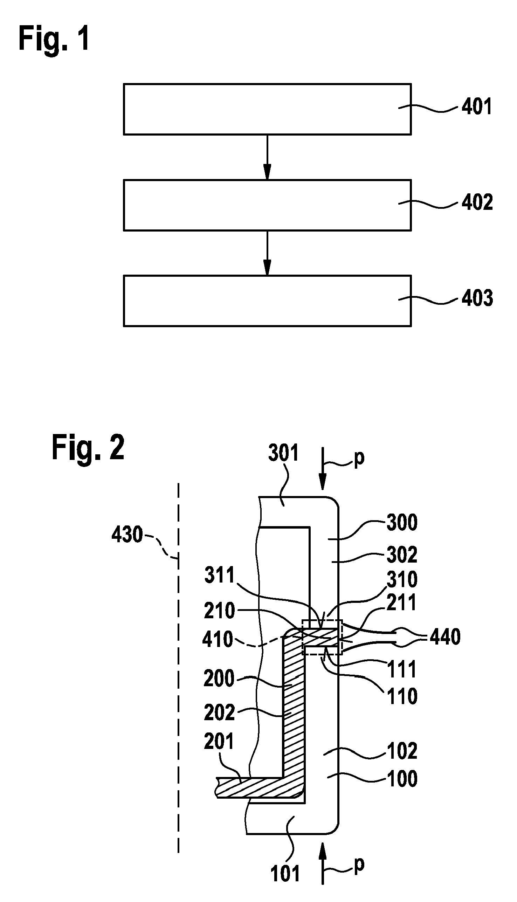

Figur 1 zeigt ein Ablaufdiagramm eines Verfahrens zum Herstellen einer Einrichtung. Bei dem Verfahren werden in einem ersten Verfahrensschritt 401 drei Bauteile bereitgestellt, welche im Folgenden auch als erstes, zweites und drittes Bauteil bezeichnet werden. Alle drei Bauteile weisen jeweils ein Kunststoffmaterial auf. Des Weiteren weisen die Bauteile endseitige Abschnitte auf, im Folgenden als Endabschnitte bezeichnet, an denen die Bauteile im Rahmen eines Laserdurchstrahlprozesses miteinander verbunden werden. Zwei der drei Bauteile sind (wenigstens) im Bereich der Endabschnitte für die eingesetzte Laserstrahlung absorbierend oder transparent ausgebildet. Das andere der drei Bauteile weist wenigstens im Bereich des zugehörigen Endabschnitts in umgekehrter Weise transparente oder absorbierende Materialeigenschaften auf. In dieser Hinsicht ist zum Beispiel an dem Endabschnitt des zweiten Bauteils ein transparentes Material, und ist an den Endabschnitten des ersten und dritten Bauteils ein absorbierendes Material vorgesehen.

Im Hinblick auf derartige Eigenschaften können lediglich die Endabschnitte der Bauteile bzw. Teilbereiche der Endabschnitte aus einem absorbierenden oder transparenten Kunststoffmaterial gebildet sein. Anstelle lediglich die Endabschnitte (bzw. Teilbereiche hiervon) absorbierend bzw. transparent auszuführen, können auch im Wesentlichen die gesamten Bauteile einheitlich aus einem absorbierenden bzw. transparenten Kunststoffmaterial ausgebildet sein bzw. ein solches Material aufweisen.

Bei den drei zu verbindenden Bauteilen kann es sich zum Beispiel um Gehäuseteile der herzustellenden Einrichtung handeln. Die Einrichtung kann zum Beispiel eine Pumpeneinrichtung darstellen. Insbesondere bei einer solchen Ausgestaltung können die drei zu verbindenden Bauteile bzw. Gehäuseteile mit weiteren Komponenten und Elementen der Einrichtung verbunden sein bzw. weitere Komponenten umfassen, welche auch andere Materialien (zum Beispiel metallische, magnetische, keramische Materialien, Halbleitermaterialien usw.) aufweisen können. Beispiele für Komponenten mit solchen Materialien sind Bestandteile eines Elektromotors (zum Beispiel Stator mit Spulenwicklungen und Rotor mit einem magnetischen Material), elektrische Verbindungs- und Kontaktelemente, eine Steuereinrichtung (beispielsweise mit auf einer Leiterplatte angeordneten Halbleiterchips), usw.

Nach dem Bereitstellen (Schritt 401) werden die drei Bauteile einem weiteren Verfahrensschritt 402 mit ihren jeweiligen Endabschnitten derart aneinander angrenzend oder anliegend angeordnet, dass ein Füge- bzw. Verbindungsbereich gebildet wird. Hierbei befindet sich der Endabschnitt des zweiten Bauteils zwischen den Endabschnitten des ersten und dritten Bauteils.

In einem weiteren Verfahrensschritt 403 wird der aus den Endabschnitten der drei Bauteile gebildete Verbindungsbereich mit einem Laserstrahl bestrahlt. Der Laserstrahl wird von einer geeigneten Laserschweißvorrichtung bzw. Laserstation ausgesendet. Mit dem einen Laserstrahl können zwei Schmelzzonen - zwischen den Endabschnitten des ersten und zweiten und zwischen den Endabschnitten des zweiten und dritten Bauteils - im Wesentlichen gleichzeitig gebildet werden, so dass nach einem Abkühlen bzw. Erstarren der jeweiligen Schmelzen die drei Bauteile über zwei Schweißnähte ("Doppelnaht") miteinander verbunden sind. Im Hinblick auf die oben angegebenen Materialeigenschaften kann der Laserstrahl zum Beispiel den transparenten Endabschnitt des zweiten Bauteils durchstrahlen und an den absorbierenden Endabschnitten des ersten und dritten Bauteils absorbiert werden, wodurch es zu einer Erwärmung und Aufschmelzung der Bauteile an diesen Stellen kommt.

Im Rahmen des Schrittes 403 kann ferner vorgesehen sein, die drei Bauteile relativ zu der Laserstation bzw. dem Laserstrahl zu bewegen (beispielsweise Drehung um eine vorgegebene Symmetrie- oder Rotationsachse), so dass zwei kontinuierliche Schweißnähte zwischen den drei Bauteilen erzeugt werden können. Alternativ kann auch die Laserstation oder der Laserstrahl entlang der Bauteile bzw. entlang des Verbindungsbereichs bewegt werden.

Durch das gemeinsame Verbinden der drei Bauteile im Rahmen eines einzelnen Prozessschritts kann eine hohe Schweißnahtqualität und Verbindungsfestigkeit erzielt werden. Des Weiteren kann das Verfahren mit lediglich einer Laserschweißvorrichtung durchgeführt werden, wodurch das Verfahren mit geringen Kosten und einem geringen Aufwand verbunden ist.

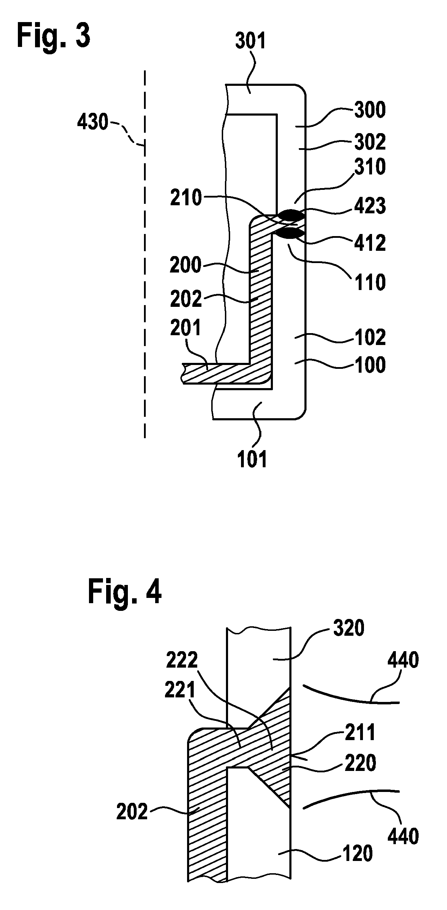

Zur Veranschaulichung des Verfahrens von Figur 1 zeigen die folgenden Figuren 2 und 3 in einer schematischen seitlichen Querschnittsdarstellung das Verbinden von drei beispielhaften Bauteilen 100, 200, 300 mittels Laserdurchstrahlschweißen. Die drei Bauteile werden im Folgenden auch als erstes Bauteil 100, zweites Bauteil 200 und drittes Bauteil 300 bezeichnet. Dabei wird darauf hingewiesen, dass es sich bei den dargestellten Strukturen lediglich um Ausschnitte bzw. Teilstücke der betreffenden Bauteile 100, 200, 300 handeln kann. Die im Querschnitt dargestellten Teilstücke können ferner jeweils im Wesentlichen rotationssymmetrisch zu einer in den Figuren 2 und 3 gestrichelt angedeuteten Rotations- bzw. Längsachse 430 sein.

Das erste Bauteil 100 (bzw. dessen im Querschnitt dargestelltes Teilstück) weist eine L-förmige Kontur mit einem (in den Figuren 2 und 3) horizontal verlaufenden Abschnitt 101 und einem sich hiervon rechtwinklig (nach oben) erstreckenden Abschnitt 102 auf. Ein Ende des Abschnitts 102, an welchem das erste Bauteil 100 mit dem zweiten Bauteil 200 verbunden wird, ist ferner als Endabschnitt 110 gekennzeichnet. Jeder Abschnitt 101, 102 des Bauteils 100 weist parallel verlaufende Seitenwände bzw. Seitenflächen (zum Beispiel Außen- und Innenwand) auf. Der im Querschnitt rechteckförmige Endabschnitt 110 weist einen vorderen bzw. vorderseitigen Bereich 111 mit einer ebenen Kontur auf.

Das dritte Bauteil 300 (bzw. dessen im Querschnitt dargestelltes Teilstück) weist eine L-Form vergleichbar zu dem ersten Bauteil 100 auf, welche jedoch spiegelsymmetrisch zu der L-Form des ersten Bauteils 100 ist. Das dritte Bauteil 300 umfasst einen (in den Figuren 2 und 3) horizontal verlaufenden Abschnitt 301 und einen sich hiervon orthogonal (nach unten) erstreckenden Abschnitt 302. Ein Ende des Abschnitts 302, an welchem das dritte Bauteil 300 mit dem zweiten Bauteil 200 verbunden wird, ist ferner als Endabschnitt 310 gekennzeichnet. Jeder Abschnitt 301, 302 des Bauteils 300 weist parallel verlaufende Seitenwände bzw. Seitenflächen (zum Beispiel Außen- und Innenwand) auf. Der im Querschnitt rechteckförmige Endabschnitt 310 weist einen vorderen bzw. vorderseitigen Bereich 311 mit einer ebenen Kontur auf.

Das zweite Bauteil 200 (bzw. dessen im Querschnitt dargestelltes Teilstück) weist eine stufenförmige Form mit einem (in den Figuren 2 und 3) horizontal verlaufenden Abschnitt 201, einem sich hiervon orthogonal (nach oben) erstreckenden Abschnitt 202, und einem hiervon rechtwinklig bzw. horizontal abgewinkelten Endabschnitt 210 auf. Jeder Abschnitt 201, 202, 210 des zweiten Bauteils 200 weist parallel verlaufende Seitenwände bzw. Seitenflächen auf. Der im Querschnitt rechteckförmige Endabschnitt 210 weist einen vorderen bzw. vorderseitigen Bereich 211 mit einer ebenen Kontur auf.

Für das Verbinden werden die drei Bauteile 100, 200, 300, wie in Figur 2 dargestellt, derart zueinander angeordnet, dass sich der abgewinkelte Endabschnitt 210 des zweiten Bauteils 200 zwischen den Endabschnitten 110, 310 des ersten und dritten Bauteils 100, 300 befindet. In dieser Position können die vorderen Bereiche 111, 311 der Endabschnitte 110, 310 an den Seiten bzw. Seitenflächen des Endabschnitts 210 anliegen bzw. angrenzen. Dabei bilden die drei Bauteile 100, 200, 300 im Bereich der Endabschnitte 110, 210, 310 einen gemeinsamen Verbindungsbereich 410, welcher in Figur 2 durch ein gestricheltes Rechteck angedeutet ist. Der Verbindungsbereich 410 umfasst vier aneinandergrenzende Seiten bzw. Flächen der Endabschnitte 110, 210, 310 der Bauteile 100, 200, 300. Des Weiteren liegt der vorder- bzw. stirnseitige Bereich 211 des Endabschnitts 210 des zweiten Bauteils 200 frei, und kann ferner bündig zu den (in Figur 2 rechtsseitigen) Seiten bzw. Seitenflächen der Endabschnitte 110, 310 der Bauteile 100, 300 sein.

Das zweite Bauteil 200 (bzw. dessen dargestelltes Teilstück) kann ferner derart ausgebildet sein, dass bei der in Figur 2 gezeigten Verbindungsanordnung, bei welcher sich der Endabschnitt 210 zwischen den Endabschnitten 110, 310 befindet, der Abschnitt 202 des Bauteils 200 an dem Abschnitt 102 des Bauteils 100 anliegt. Dies kann in entsprechender Weise (entgegen der Darstellung in den Figuren 2 und 3) auch für die Abschnitte 201 und 101 vorgesehen sein.

Im Hinblick auf das Laserdurchstrahlschweißen weist das zweite Bauteil 200 bzw. wenigstens dessen Endabschnitt 210 ein für eine Laserstrahlung transparentes Kunststoffmaterial auf. Die beiden anderen Bauteile 100, 300 weisen hingegen wenigstens im Bereich der Endabschnitte 110, 310 (bzw. wenigstens im Bereich der vorderen Bereiche 111, 311) jeweils ein Kunststoffmaterial mit absorbierenden Eigenschaften auf. Hierbei können beide Bauteile 100, 300 dasselbe, oder auch verschiedene absorbierende Kunststoffmaterialien aufweisen.

Zum Verbinden der drei Bauteile 100, 200, 300 wird, wie in Figur 2 angedeutet, der aus den Endabschnitten 110, 210, 310 gebildete Verbindungsbereich 410 mit einem Laserstrahl 440 aus einer (nicht dargestellten) Laserschweißvorrichtung bestrahlt. Hierbei ist der Laserstrahl 440 bzw. dessen Laserfokus auf den vorderseitigen Bereich 211 des (transparenten) Endabschnitts 210 des zweiten Bauteils 200 gerichtet. Auf diese Weise kann der Laserstrahl 440 in den Endabschnitt 210 eingekoppelt und zu den vorderseitigen Bereichen 111, 311 der (absorbierenden) Endabschnitte 110, 310 des ersten und dritten Bauteils 100, 300 transmittiert werden. An diesen Stellen kann die Laserstrahlung absorbiert werden, was mit einer Temperaturerhöhung und infolgedessen einem Aufschmelzen der Materialien des ersten und dritten Bauteils 100, 300 verbunden ist. Im Wesentlichen gleichzeitig findet auch eine Wärmeleitung von den Endabschnitten 110, 310 der Bauteile 100, 300 zu dem dazwischen angeordneten Endabschnitt 210 des zweiten Bauteils 200 statt, welches ebenfalls in diesen Bereichen aufschmilzt. Dies führt zur im Wesentlichen gleichzeitigen Ausbildung von jeweils einer Schmelzzone sowohl zwischen dem ersten und zweiten Bauteil 100, 200 als auch zwischen dem zweiten und dritten Bauteil 200, 300. In den Schmelzzonen kann auch eine Materialdurchmischung stattfinden. Nach einem Erstarren der jeweiligen Schmelzen sind, wie weiter in Figur 3 dargestellt, das erste und zweite Bauteil 100, 200 über eine Schweißverbindung bzw. Schweißnaht 412, und das zweite und dritte Bauteil 200, 300 über eine Schweißverbindung bzw. Schweißnaht 423 miteinander verbunden.

Während des Schweißverfahrens werden die drei Bauteile 100, 200, 300 ferner, wie in Figur 2 anhand von Pfeilen angedeutet ist, mit einem von außen aufgebrachten Schweiß-/Fügedruck p beaufschlagt, wodurch eine ausreichende Wärmeleitung von den (absorbeierenden) Endabschnitten 110, 310 der Bauteile 100, 300 zu dem (transparenten) Endabschnitt 210 des Bauteils 200 hervorgerufen werden kann. Der Schweiß-/Fügedruck p, dessen Kraftwirkung im Wesentlichen in einer Richtung parallel zur Längsachse 430 erfolgen kann, kann zum Beispiel dadurch erzeugt werden, dass eine vorgegebene Druckkraft auf eines der Bauteile 100, 300 ausgeübt wird, wohingegen des andere der Bauteile 100, 300 feststeht bzw. an einer entsprechenden Haltevorrichtung fixiert ist. Des Weiteren besteht die Möglichkeit, eines der Bauteile 100, 300 um eine vorgegebene Wegstrecke zu verschieben. Alternativ können auch zum Beispiel vorgegebene Kräfte auf beide Bauteile 100, 300 ausgeübt, oder beide Bauteile 100, 300 um eine vorgegebene Wegstrecke verschoben werden.

Um den Schweißvorgang zu begünstigen, kann der Laserstrahl 440, wie in Figur 2 angedeutet, in Form eines sich aufweitenden Strahls auf den Fügebereich 410 bzw. auf den vorderseitigen Bereich 211 des Endabschnitts 210 gerichtet werden. Hierdurch kann erreicht werden, dass die Strahlung im Wesentlichen über die gesamte Dicke bzw. Querschnittsbreite der vorderseitigen Bereiche 111, 311 der Endabschnitte 110, 310 absorbiert werden kann. Auch kann der Laserstrahl 440 bzw. dessen Laserfokus derart gewählt werden, dass eine Bestrahlung (wenigstens) über die gesamte Dicke bzw. Querschnittsbreite des vorderseitigen Bereichs 211 des Endabschnitts 210 stattfindet. Eine Begünstigung des Schweißvorgangs kann darüber hinaus durch eine zum Aufschmelzen der jeweiligen Materialien geeignete, gegebenenfalls relativ hohe Intensität der Laserstrahlung bewirkt werden.

Im Rahmen des Schweißvorgangs kann ferner vorgesehen sein, die drei Bauteile 100, 200, 300 relativ zu der eingesetzten Laserschweißvorrichtung bzw. dem Laserstrahl 440 zu bewegen, so dass zwei durchgehende oder umlaufende Schweißnähte 412, 423 zwischen den Bauteilen 100, 200, 300 erzeugt werden. In Betracht kommt zum Beispiel eine Drehung der Bauteile 100, 200, 300 um die Längsachse 430. Möglich ist es auch, die Laserschweißvorrichtung und damit den Laserstrahl 440 bezogen auf die Längsachse 430 radial um die drei Bauteile 100, 200, 300 herum zu bewegen.

Neben Prozessparametern wie zum Beispiel dem Laserfokus und dem Schweiß-/Fügedruck kann der Schweißvorgang auch durch eine entsprechende Geometrie der Endabschnitte 110, 210, 310 der Bauteile 100, 200, 300 beeinflusst bzw. begünstigt werden. In dieser Hinsicht sind anstelle der in den Figuren 2 und 3 dargestellten und im Querschnitt rechteckförmigen Endabschnitte 110, 210, 310 alternative Ausgestaltungen vorstellbar, mit deren Hilfe die den Schmelzvorgang bewirkende Transmission und Absorption von Laserstrahlung intensiver gestaltet werden kann. Mögliche beispielhafte Ausführungsformen werden anhand der folgenden Figuren näher beschrieben. Dabei wird darauf hingewiesen, das im Hinblick auf bereits beschriebene Details, welche sich auf gleichartige oder übereinstimmende Merkmale und Komponenten, Verfahrensschritte, mögliche Vorteile usw. beziehen, auf die vorstehenden Ausführungen Bezug genommen wird.

Figur 4 zeigt einen Ausschnitt eines Verbindungsbereichs der Bauteile 100, 200, 300, welche gegenüber den in Figur 2 gezeigten Endabschnitten 110, 210, 310 abgewandelte Endabschnitte 120, 220, 320 aufweisen. Hierbei weist der abgewinkelte Endabschnitt 220 des zweiten Bauteils 200 ausgehend von dem Abschnitt 202 einen geraden Teilabschnitt 221 mit parallel verlaufenden Seitenwänden bzw. Seitenflächen, und hieran angrenzend einen sich in Richtung des vorderseitigen Bereichs 211 aufweitenden bzw. verbreiternden Teilabschnitt 222 mit schräg verlaufenden Seitenflächen auf. Die Endabschnitte 120, 320 der beiden anderen Bauteile 100, 300, zwischen denen der Endabschnitt 220 des zweiten Bauteils 200 angeordnet ist, weisen jeweils eine an die Form des Endabschnitts 220 angepasste Form auf, so dass (erneut) ein flächiger Berührkontakt der Endabschnitte 120, 320 an dem Endabschnitt 220 ermöglicht wird.

Die Ausgestaltung des Endabschnitts 220 mit dem sich aufweitenden Teilabschnitt 222 bietet die Möglichkeit, eine verbesserte Transmission von Laserstrahlung zu den Endabschnitten 120, 320 der Bauteile 100, 300 zu erzielen, und infolgedessen an diesen Stellen eine größere Absorption von Laserstrahlung zu erhalten. Auf diese Weise kann die Erzeugung der zwei Schmelzzonen im Bereich der aneinander liegenden Endabschnitte 120, 220 und 220, 320, und damit die Ausbildung der zwei Schweißnähte zwischen den drei Bauteilen 100, 200, 300 begünstigt werden. Des Weiteren kann - bei gleichbleibender Breite bzw. Dicke der Endabschnitte 120, 320 - die Größe der Schmelzzonen und infolgedessen die Schweißnahtbreite vergrößert werden. Hiermit verbunden ist eine höhere Schweißnahtqualität und Schweißnahtfestigkeit.

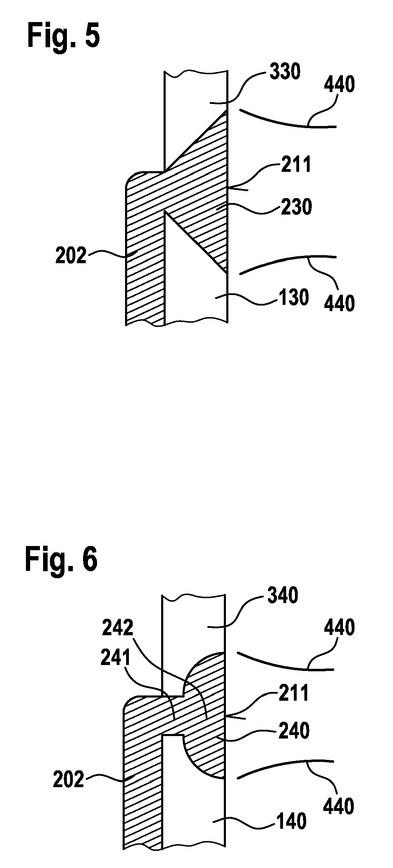

Figur 5 zeigt einen Ausschnitt einer weiteren Ausführungsform, bei welcher ein Endabschnitt 230 des zweiten Bauteils 200 zwischen Endabschnitten 130, 330 der anderen Bauteile 100, 300 angeordnet ist. Hierbei weist der gesamte Endabschnitt 230 eine sich in Richtung des vorderseitigen Bereichs 211 aufweitende Form mit schräg verlaufenden Seitenflächen auf. Die Endabschnitte 130, 330 weisen an diese Form angepasste Konturen auf. Auch auf diese Weise kann die Intensität der Transmission und Absorption von Laserstrahlung begünstigt, und ferner eine große Schweißnahtbreite der zwischen den Endabschnitten 130, 230 und 230, 330 gebildeten Schweißnähte verwirklicht werden.

Dies gilt in entsprechender Weise für andere Endabschnitte mit sich aufweitenden Formen, bei denen beispielsweise statt gerader bzw. schräg verlaufender Seitenflächen gekrümmte Seitenflächen vorgesehen sind. Zur Veranschaulichung zeigt Figur 6 eine mögliche Ausgestaltung, bei welcher ein zwischen Endabschnitten 140, 340 des ersten und dritten Bauteils 100, 300 angeordneter Endabschnitt 240 des zweiten Bauteils 200 ausgehend von dem Abschnitt 202 einen geraden Teilabschnitt 241 mit parallel verlaufenden Seitenwänden bzw. Seitenflächen, und hieran angrenzend einen sich in Richtung des vorderseitigen Bereichs 211 aufweitenden bzw. verbreiternden Teilabschnitt 242 mit gekrümmt verlaufenden bzw. teilkreisförmigen Seitenflächen aufweist. Die Endabschnitte 140, 340 weisen wiederum jeweils eine an die Form des Endabschnitts 240 angepasste Form auf. Auf diese Weise kann die Intensität der Transmission und Absorption von Laserstrahlung ebenfalls begünstigt, und eine große Schweißnahtbreite der zwischen den Endabschnitten 140, 240 und 240, 340 gebildeten Schweißnähte erzielt werden.

Anstelle das zweite Bauteil 200 (bzw. dessen Endabschnitt) transparent und die anderen Bauteile 100, 300 (bzw. deren Endabschnitte) absorbierend auszuführen, können diese Materialeigenschaften auch in umgekehrter Weise auf die zu verbindenden Bauteile 100, 200, 300 "verteilt" sein. Diese Ausgestaltung kann auch eine entsprechende Gestaltung bzw. Geometrie der jeweiligen Endabschnitte zur Folge haben, um die drei Bauteile 100, 200, 300 zuverlässig miteinander zu verbinden.

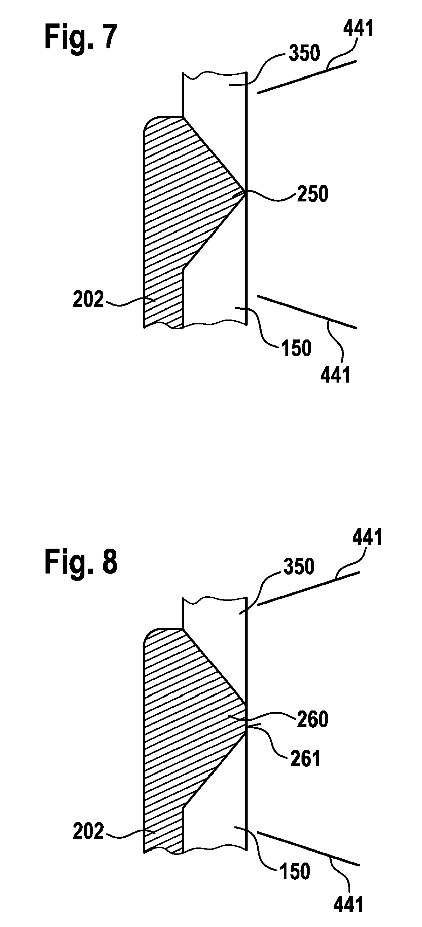

Zur beispielhaften Veranschaulichung zeigt Figur 7 eine weitere mögliche Ausführungsform, bei der das zweite Bauteil 200 einen sich in Richtung einer Vorderseite (rechte Seite in Figur 7) verjüngenden bzw. spitz zulaufenden Endabschnitt 250 mit schräg verlaufenden Flächen aufweist. Die anderen Bauteile 100, 300 weisen Endabschnitte 150, 350 mit an diese Form angepassten Formen auf, so dass der Endabschnitt 250 in der in Figur 7 gezeigten Verbindungsanordnung im Wesentlichen vollständig von den Endabschnitten 150, 350 eingefasst bzw. verdeckt wird.

Zum Verbinden der drei Bauteile 100, 200, 300, wird, wie in Figur 7 dargestellt, der aus den aneinander liegenden Endabschnitten 150, 250, 350 gebildete Verbindungsbereich mit einem Laserstrahl 441 aus einer (nicht dargestellten) Laserschweißvorrichtung bestrahlt. Hierbei wird der Laserstrahl 441 bzw. dessen Laserfokus insbesondere auf den von den Endabschnitten 150, 350 eingefassten Endabschnitt 250 gerichtet, so dass der Laserstrahl 441 - abgesehen von einem Bereich an der Spitze des Endabschnitts 250 - die den Endabschnitt 250 umgebenden (transparenten) Endabschnitte 150, 350 transmittieren kann. Durch Absorption der Laserstrahlung an dem (absorbierenden) Endabschnitt 250 verbunden mit Wärmeleitung zu den anderen Endabschnitten 150, 350 kann ein Aufschmelzen und infolgedessen Verbinden der Materialien der drei Bauteile 100, 200, 300 im Bereich der Endabschnitte 150, 250, 350 hergerufen werden. Dabei können (erneut) zwei Schweißnähte zwischen den drei Bauteilen 100, 200, 300 ausgebildet werden, welche (allerdings) im Bereich der Spitze des Endabschnitts 250 miteinander verbunden sein können.

Augrund der schräg verlaufenden Flächen des spitz zulaufenden Endabschnitts 250 kann eine relativ große Schweißnahtbreite verwirklicht werden. Des Weiteren kann der Laserstrahl 441, wie in Figur 7 angedeutet, im Unterschied zu dem in den Figuren 2 bis 5 dargestellten Laserstrahl 440 in Form eines sich verengenden Strahls auf den Verbindungsbereich der drei Bauteile 100, 200, 300 gerichtet werden, um die Transmission und Absorption der Laserstrahlung intensiver zu gestalten.

Figur 8 zeigt eine Abwandlung der Ausführungsform von Figur 7. Hierbei weist das Bauteil 200 einen sich verjüngenden Endabschnitt 260 auf, bei dem die schräg verlaufenden Flächen nicht wie bei dem Endabschnitt 250 von Figur 7 in einer Spitze zusammenlaufen, sondern an einen flächigen vorderseitigen Bereich 261 angrenzen. Die anderen Bauteile 100, 300 weisen erneut die Endabschnitte 150, 350 auf.

In der in Figur 8 gezeigten Verbindungsanordnung liegen die Endabschnitte 150, 350 an den schrägen Flächen des Endabschnitts 260 an, wohingegen der vorderseitige Bereich 261 frei liegt. Der Bereich 261 kann ferner bündig zu den (in Figur 8 rechtsseitigen) Seiten bzw. Seitenflächen der Endabschnitte 150, 350 der Bauteile 100, 300 sein. Durch Bestrahlen des aus den aneinander liegenden Endabschnitten 150, 260, 350 gebildeten Verbindungsbereichs mit dem (sich vorzugsweise verengenden) Laserstrahl 441 kann auch in dieser Ausgestaltung ein Aufschmelzen und infolgedessen Verbinden der Materialien der drei Bauteile 100, 200, 300 an diesen Stellen hervorgerufen werden.

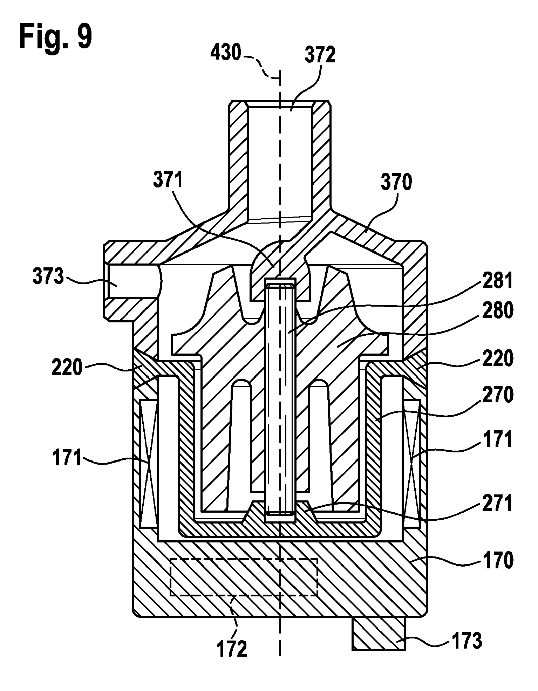

Figur 9 zeigt eine schematische seitliche Darstellung einer beispielhaften Pumpeneinrichtung, bei welcher die simultane Verschweißung von drei Kunststoff-Fügepartnern zum Einsatz kommen kann. Die Pumpeneinrichtung, welche zum Beispiel in einem Kühlkreislauf eines Kraftfahrzeugs eingesetzt wird, weist ein Pumpengehäuse 370, ein Laufrad-Aufnahmegehäuse 270 und ein Motorgehäuse 170 auf. Die Gehäuseteile 170, 270, 370 bzw. deren Außenkonturen sind im Wesentlichen rotationssymmetrisch zu einer in Figur 9 angedeuteten Längsachse 430 der Pumpeneinrichtung.

Durch das Pumpengehäuse 370 und das Laufrad-Aufnahmegehäuse 270 wird ein Nassraum der Pumpeneinrichtung begrenzt. In dem Laufrad-Aufnahmegehäuse 270, welches topfförmig ausgebildet ist, ist ein Laufrad 280 mit einer Welle 281 angeordnet. Die Welle 281 ist über einen an dem Laufrad-Aufnahmegehäuse 270 angeordneten Halteabschnitt 271 und über einen weiteren, an dem Pumpengehäuse 370 vorgesehenen Halteabschnitt 371 drehbar gelagert.

Das Pumpengehäuse 370 weist ferner einen Einlass 372 und einen Auslass 373 auf, über welche ein Medium (beispielsweise ein Kühlmittel) in den Nassraum eingebracht bzw. ein in dem Nassraum befindliches Medium diesen wieder verlassen kann. Der Einlass 372 kann zum Beispiel in Form eines Ansaugstutzens, und der Auslass 373 zum Beispiel in Form eines Druckstutzens ausgebildet sein.

Das Motorgehäuse 170 umfasst einen als Stator dienenden Spulenkörper 171, mit dessen Hilfe das Laufrad 280 in eine Drehbewegung versetzt werden kann. Zu diesem Zweck kann das als Rotor wirkende Laufrad 280 zum Beispiel aus einem Plastoferrit-Material gebildet sein. Zur Ansteuerung der Wicklungen des Spulenkörpers 171 umfasst das Motorgehäuse 170 ferner eine Steuereinrichtung 172. Des Weiteren ist auch eine elektrische Anschlusseinrichtung 173 vorgesehen, über welche dem Motorgehäuse 170 bzw. dessen Komponenten Steuersignale und elektrischer Strom zugeführt werden können.

Bei einer herkömmlichen Ausgestaltung sind die drei Kunststoff-Gehäuseteile 170, 270, 370 zum Beispiel über eine Schraubverbindung miteinander verbunden. Dies hat den Nachteil, dass eine über die Schraubverbindung vorgenommene Vorspannung aufgrund des Relaxationsverhaltens der Kunststoffteile, insbesondere unter dem Einfluss von zum Beispiel Temperatur und Druck, abnehmen kann, wodurch ein Undichtigkeitsproblem bestehen kann.

Um dieses Problem zu vermeiden, ist vorgesehen, die drei Gehäuseteile 170, 270, 370 entsprechend den oben beschriebenen Ansätzen in einem gemeinsamen Laserschweißprozess miteinander zu verbinden. Wie in Figur 9 dargestellt, sind zu diesem Zweck Endabschnitte der drei Gehäuseteile 170, 270, 370, an welchen die Gehäuseteile 170, 270, 370 miteinander verbunden werden, zum Beispiel mit einer Form entsprechend dem Ausführungsbeispiel von Figur 4 versehen. Dabei weist das Laufrad-Aufnahmegehäuse 270 den Endabschnitt 220 auf, welcher zum Beispiel die Längsachse 430 radial umlaufend ausgebildet ist. Die beiden anderen Gehäuseteile 170, 370 weisen (die Längsachse 430 radial umlaufende) Endabschnitte mit an den Endabschnitt 220 angepassten Formen auf. Auch ist das Laufrad-Aufnahmegehäuse 270 (bzw. dessen Endabschnitt 220) transparent, und sind die anderen Gehäuseteile 170, 370 (bzw. deren Endabschnitte) absorbierend ausgebildet.

Zum Laserschweißen der drei Fügeteile 170, 270, 370 werden diese in die in Figur 9 gezeigte Anordnung gebracht. Des Weiteren wird ein von einer Laserstation erzeugter Laserstrahl auf den Endabschnitt 220 gerichtet, um die Gehäuseteile 170, 270, 370 wie oben beschrieben in simultaner Weise miteinander zu verbinden. Hierbei kann zum Beispiel der Laserstrahl bzw. dessen Laserfokus ortsfest erzeugt werden, und die gesamte Anordnung um die in Figur 9 angedeutete Längsachse 430 gedreht werden. Alternativ ist es möglich, die Laserstation und damit den Laserstrahl im Bereich der zu verbindenden Endabschnitte um die Gehäusteile 170, 270, 370 herum zu bewegen.

Anstelle bei der Pumpeneinrichtung eine Verschweißung mit Endabschnitten gemäß dem Ausführungsbeispiel von Figur 4 vorzusehen, können die Endabschnitte der Gehäuseteile 170, 270, 370 alternativ auch entsprechend den in den anderen Figuren 2, 3, 5, 6, 7 dargestellten Formen ausgebildet sein.

Die anhand der Figuren erläuterten Ausführungsformen stellen bevorzugte bzw. beispielhafte Ausführungsformen der Erfindung dar. Anstelle der beschriebenen Ausführungsformen sind weitere Ausführungsformen vorstellbar, welche weitere Abwandlungen oder Kombinationen von beschriebenen Merkmalen umfassen können.

Insbesondere besteht die Möglichkeit, dass zu verbindende Bauteile, einschließlich derjenigen der Pumpeneinrichtung von Figur 9, andere Formen und Geometrien aufweisen. Beispielsweise können drei zu verbindende Fügepartner (außenseitige) Konturen aufweisen, welche nicht rotationssymmetrisch zu einer Rotations- bzw. Längsachse sind. In dieser Hinsicht können die Fügeteile bzw. deren Konturen zum Beispiel eine in einer Aufsicht rechteckförmige Form aufweisen.

Des Weiteren können mit dem Verfahren nicht nur durchgehende und Bauteile vollständig umlaufende Schweißverbindungen gebildet werden. So besteht beispielsweise die Möglichkeit, nur punktuelle oder sich über Teilabschnitte erstreckende Schweißverbindungen zu erzeugen. Dies kann ebenfalls in simultaner Weise mit den oben beschriebenen Ansätzen zur Verbindung von drei Bauteilen verwirklicht werden.

Die Verwendung anderer Formen und Geometrien ist insbesondere auch bei Endabschnitten möglich, an welchen drei Bauteile miteinander verbunden werden. In dieser Hinsicht ist es beispielsweise vorstellbar, andere als die in den Figuren 4 bis 6 gezeigten Endabschnitte 220, 230, 240 mit sich verbreiternden Formen zu verwirklichen. Hierunter fallen auch komplexere Formen, bei denen zum Beispiel mehrere miteinander verbundene und unter verschiedenen Winkeln bzw. Öffnungswinkeln verlaufende schräge Flächen vorgesehen sind. Auch im Hinblick auf gekrümmte Flächen sind andere Ausgestaltungen vorstellbar. Hierunter fallen zum Beispiel Endabschnitte mit variierenden Krümmungen bzw. Krümmungsradien. Des weiteren kann zum Beispiel bei dem Ausführungsbeispiel von Figur 6 der Teilabschnitt 241 weggelassen werden, so dass der Endabschnitt 240 lediglich den sich verbreiternden Teilabschnitt 241 umfasst.

Abwandlungen sind in entsprechender Weise auch für die sich verjüngenden bzw. verengenden Endabschnitte 250, 260 der Figuren 7 und 8 vorstellbar. Beispielsweise ist es möglich, anstelle von schrägen Flächen gekrümmte Konturen vorzusehen.

Darüber hinaus wird darauf hingewiesen, dass gegebenenfalls das Anwenden eines von außen aufgebrachten Schweiß-/Fügedrucks weggelassen werden kann. Dies setzt eine beim Aufschmelzen stattfindende Volumenausdehnung eines oder mehrerer Bauteile bzw. von deren Materialien voraus, um einen entsprechenden Schweiß-/Fügedruck verbunden mit einer ausreichenden Wärmleitung zwischen den zu verbindenden Bauteilen zur Verfügung zu stellen.

## Patentansprüche

1. Verfahren zum Herstellen einer Einrichtung durch Verbinden eines ersten, zweiten und dritten Bauteils (100, 170, 200, 270, 300, 370) mittels Laserdurchstrahlschweißen, umfassend die Verfahrensschritte:
Bilden eines Verbindungsbereichs (410) durch Anordnen des ersten, zweiten und dritten Bauteils (100, 170, 200, 270, 300, 370) derart zueinander, dass sich ein Endabschnitt (210, 220, 230, 240, 250, 260) des zweiten Bauteils (200, 270) zwischen Endabschnitten (110, 120, 130, 140, 150, 310, 320, 330, 340, 350) des ersten und dritten Bauteils (100, 170, 300, 370) befindet, und
Bestrahlen des Verbindungsbereichs (410) mit einem Laserstrahl (440, 441), wobei sowohl das erste und zweite Bauteil (100, 170, 200, 270) als auch das zweite und dritte Bauteil (200, 270, 300, 370) an den Endabschnitten (110, 120, 130, 140, 150, 210, 220, 230, 240, 250, 260, 310, 320, 340, 350) miteinander verbunden werden.

2. Verfahren nach Anspruch 1,
wobei das zweite Bauteil (200, 270) wenigstens an dem Endabschnitt (210, 220, 230, 240) ein für den Laserstrahl (440) transparentes Material aufweist, und wobei das erste und dritte Bauteil (100, 170, 200, 270) wenigstens an den Endabschnitten (110, 120, 130, 140, 310, 320, 330, 340) ein für den Laserstrahl (440) absorbierendes Material aufweisen.

3. Verfahren nach Anspruch 2,
wobei das erste, zweite und dritte Bauteil (100, 170, 200, 270, 300, 370) derart zueinander angeordnet werden, dass ein vorderseitiger Bereich (211) des Endabschnitts (210, 220, 230, 240) des zweiten Bauteils (200, 270) freiliegt,
und wobei der Laserstrahl (440) auf den vorderseitigen Bereich (211) des Endabschnitts (210, 220, 230, 240) des zweiten Bauteils (200, 270) gerichtet wird.

4. Verfahren nach einem der vorhergehenden Ansprüche,
wobei der Endabschnitt (220, 230, 240) des zweiten Bauteils (200, 270) eine sich in Richtung eines vorderseitigen Bereichs (211) aufweitende Form aufweist,
und wobei die Endabschnitte (120, 130, 140, 320, 330, 340) des ersten und dritten Bauteils (100, 170, 300, 370) jeweils eine an die aufweitende Form des Endabschnitts (220, 230, 240) des zweiten Bauteils (200, 270) angepasste Form aufweisen.

5. Verfahren nach Anspruch 4,
wobei der Endabschnitt (220, 230, 240) des zweiten Bauteils (200, 270) schräge oder gekrümmte Seitenflächen aufweist.

6. Verfahren nach einem der vorhergehenden Ansprüche,
wobei der Laserstrahl (440) in Form eines sich aufweitenden Strahls auf den Verbindungsbereich (410) gerichtet wird.

7. Verfahren nach Anspruch 1,
wobei das zweite Bauteil (200, 270) wenigstens an dem Endabschnitt (250, 260) ein für den Laserstrahl (441) absorbierendes Material aufweist, und wobei das erste und zweite Bauteil (100, 170, 300, 370) wenigstens an den Endabschnitten (150, 350) ein für den Laserstrahl transparentes Material aufweisen.

8. Verfahren nach Anspruch 7,
wobei der Endabschnitt (250, 260) des zweiten Bauteils (200, 270) eine sich in Richtung eines vorderseitigen Bereichs (261) verjüngende Form aufweist, und wobei die Endabschnitte (150, 350) des ersten und dritten Bauteils (100, 170, 300, 370) jeweils eine an die sich verjüngende Form des Endabschnitts (250, 260) des zweiten Bauteils (200, 270) angepasste Form aufweisen.

9. Verfahren nach einem der vorhergehenden Ansprüche,
wobei die Bauteile (100, 170, 200, 270, 300, 370) aneinander gedrückt werden.

10. Verfahren nach einem der vorhergehenden Ansprüche,
wobei bei dem Verfahren ein Pumpengehäuse (370), ein Laufrad-Aufnahmegehäuse (270) und ein Motorgehäuse (170) einer Pumpeneinrichtung miteinander verbunden werden,
und wobei in dem Laufrad-Aufnahmegehäuse (270) ein Laufrad (280) und in dem Motorgehäuse (170) ein Motorteil (171) zum Antreiben des Laufrads (280) angeordnet ist.
